# EUROPÄISCHE PATENTSCHRIFT

(11) **EP 1 280 998 B1**
(45) Veröffentlichungstag und Bekanntmachung des Hinweises auf die Patenterteilung: **20.06.2007**
(21) Anmeldenummer: 00983241.1
(22) Anmeldetag: 04.11.2000
(51) Int. Cl.: F04D 29/60, F04D 29/66

(54) **VAKUUMPUMPE MIT SCHWINGUNGSDÄMPFER**
VACUUM PUMP WITH VIBRATION ABSORBER
POMPE A VIDE AVEC AMORTISSEUR D'OSCILLATIONS

(30) Priorität: 15.01.2000 DE 10001509
(43) Veröffentlichungstag der Anmeldung: 05.02.2003
(73) Patentinhaber: Leybold Vacuum GmbH, 50968 Köln (DE)
(72) Erfinder: ADAMIETZ, Ralf, 42929 Wermelskirchen (DE); BEYER, Christian, 50765 Köln (DE); ENGLÄNDER, Heinrich, 52441 Linnich (DE); GÖTZ, Dieter, 51145 Köln (DE)
(74) Vertreter: Leineweber, Jürgen
(86) Internationale Anmeldenummer: PCT/EP2000/012336
(87) Internationale Veröffentlichungsnummer: WO 2001/051817

(56) Entgegenhaltungen:
- US-A- 3 000 389
- US-A- 4 659 117
- PATENT ABSTRACTS OF JAPAN vol. 011, no. 160 (M-592), 23. Mai 1987 (1987-05-23) & JP 61 294191 A (SEIKO SEIKI CO LTD;OTHERS: 01), 24. Dezember 1986 (1986-12-24)
- PATENT ABSTRACTS OF JAPAN vol. 005, no. 166 (M-093), 23. Oktober 1981 (1981-10-23) & JP 56 092396 A (HITACHI LTD), 27. Juli 1981 (1981-07-27)
- PATENT ABSTRACTS OF JAPAN vol. 005, no. 093 (M-074), 17. Juni 1981 (1981-06-17) & JP 56 038598 A (HITACHI LTD), 13. April 1981 (1981-04-13)

## Beschreibung

Die Erfindung bezieht sich auf eine Vakuumpumpe mit einem Gehäuse, das mit einer Einlassöffnung ausgerüstet ist, sowie mit einem Schwingungsdämpfer, der aus einem Federungskörper und einem den Federungskörper umfassenden Dämpfermantel besteht.

Bei Vakuumpumpen können Schwingungen der die Förderung der Gase bewirkenden, z.B. rotierenden Bauteile nicht vollständig vermieden werden. Es ist deshalb bekannt, Schwingsdämpfer einzusetzen, wenn eine Vakuumpumpe dieser Art an empfindliche Geräte, wie Elektronenmikroskope, Analysengeräte und desgleichen, angeschlossen werden muss, siehe z.B. JP 61-294191 A, JP 56-092396 A oder JP 56-038598 A. Bekannte Schwingungsdämpfer weisen einen vakuumdichten Federungskörper auf, z.B. ein Federbalgabschnitt aus Edelstahl, der von einem Dämpfermantel aus einem Elastomer-Werkstoff umfasst wird. Beide Stirnseiten des Federungskörpers sind jeweils mit einem Flansch ausgerüstet. Im montierten Zustand ist einer der Flansche mit dem Einlassflansch der Vakuumpumpe verbunden; der zweite Flansch steht mit dem korrespondierenden Flansch am jeweiligen Gerät in Verbindung.

Von Nachteil ist, dass sich beim Einsetzen bekannter Schwingungsdämpfer relativ große Bauhöhen des Systems ergeben, insbesondere dann, wenn es sich um axialfördernde Vakuumpumpen, z.B. Turbomolekularvakuumpumpen handelt.

Der vorliegenden Erfindung liegt die Aufgabe zugrunde, die Bauhöhe eines Evakuierungssystems der eingangs erwähnten Art zu reduzieren.

Erfindungsgemäß wird diese Aufgabe durch die kennzeichnenden Merkmale der Patentansprüche gelöst.

Bereits die unmittelbare Verbindung - z.B. durch Schweißen - des druckseitigen Endes des Federungskörpers mit dem Gehäuse der Vakuumpumpe führt zu einer Reduzierung der Bauhöhe des Gesamtsystems, da ein Flanschpaar entfallen kann. Hat jedoch der Federungskörper einen den Außendurchmesser des Gehäuses der Vakuumpumpe übersteigenden Innendurchmesser, dann besteht die Möglichkeit die Bauhöhe weiter zu reduzieren, indem der Schwingungsdämpfer so angeordnet wird, dass er das Gehäuse der Vakuumpumpe umfasst.

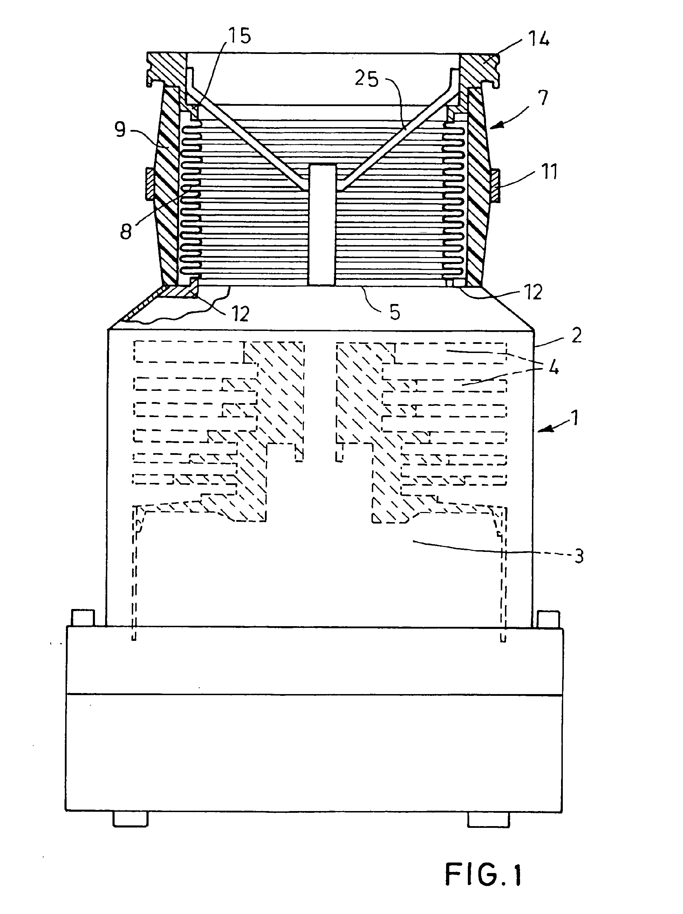

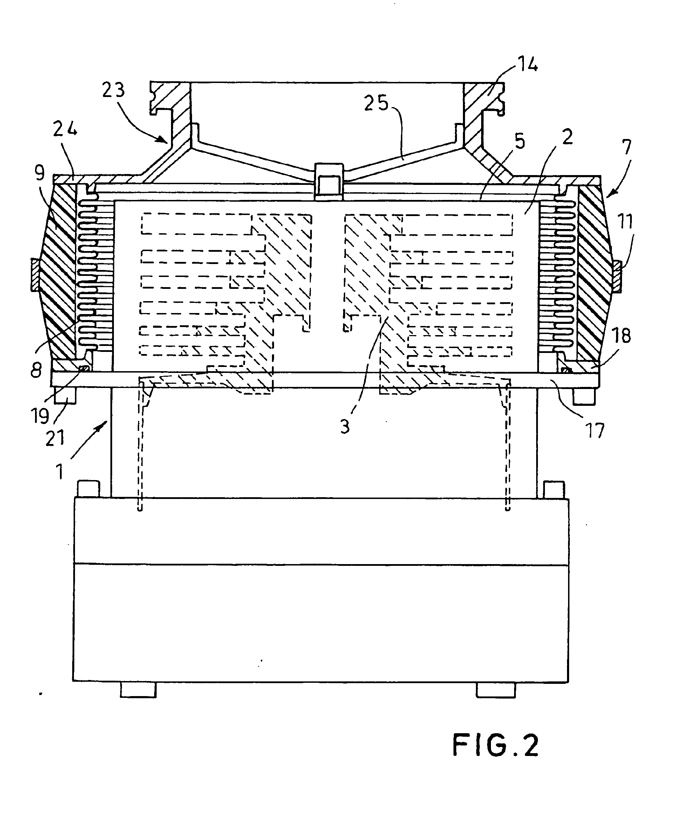

Weitere Vorteile und Einzelheiten der Erfindung sollen anhand von in den Figuren 1 und 2 schematisch dargestellten Ausführungsbeispielen erläutert werden.

Als Beispiel für eine Vakuumpumpe ist bei beiden Ausführungen eine Turbomolekularvakuumpumpe 1 gewählt, deren Gehäuse mit 2 bezeichnet ist. Von der Turbomolekularvakuumpumpe 1 ist im wesentlichen nur die Silhouette des Gehäuses 2 sichtbar; lediglich ein Teil des rotierenden Systems 3 mit seinen Rotorschaufeln 4 ist gestrichelt dargestellt. Auf der Saugseite des Gehäuses 2 der Pumpe 1 befindet sich eine stirnseitig gelegene Einlassöffnung 5; ein Auslaß ist nicht dargestellt.

Die Vakuumpumpe 1 ist mit einem Schwingungsdämpfer 7 ausgerüstet. Dieser besteht aus dem Federungskörper 8, den der Dämpfermantel 9 umgibt. Der Dämpfermantel 9 seinerseits ist noch auf seiner Außenseite mit einem Armierungsring 11 ausgerüstet, der die Aufgabe hat, den auf Knickung beanspruchten Dämpfermantel gegen radiales Ausweichen der Beanspruchung zu sichern bzw. den axial geführten Dämpfermantel 9 auf dem Federungskörper 8 zu fixieren.

Beim Ausführungsbeispiel nach Figur 1 ist der die Einlassöffnung 5 umgebende Rand 12 des Gehäuses 2 der Turbomolekularvakuumpumpe 1 mit dem Federungskörper 8 unmittelbar verschweißt. Die Dimensionen sind so gewählt, dass sich auch noch der den Federungskörper 8 umgebende Dämpfermantel 9 auf dem Rand 12 der Einlassöffnung 5 abstützen kann. Saugseitig trägt der Federungskörper 8 den Anschlussflansch 14. Dieser weist einen inneren Rand 15 auf, der mit der saugseitigen Stirnseite des Federungskörpers 8 verschweißt ist. Der Dämpfermantel 9 stützt sich auf dem Flansch 14 ab.

Da bei der Ausführung nach Figur 1 das beim Stand der Technik nötige Flanschpaar zwischen dem Gehäuse 2 der Vakuumpumpe 1 und dem Schwingungsdämpfer 7 entfällt, ergibt sich bereits eine Reduzierung der axialen Bauhöhe des aus Schwingungsdämpfer 7 und Pumpe 1 bestehenden Evakuierungssystems.

Beim Ausführungsbeispiel nach Figur 2 ist das Gehäuse 2 der Turbomolekularpumpe 1 mit einem umlaufenden Ring 17 ausgerüstet. Dieser ist so angeordnet, dass sein Abstand von der Einlassöffnung 5 etwa der Höhe des Federungskörpers 8 entspricht. Der Innendurchmesser des Federungskörpers 8 ist etwas größer als der Außendurchmesser des Gehäuses 2. Dadurch ist es möglich, die saugseitige Stirnseite des Federungskörpers 8 vakuumdicht mit dem umlaufenden gehäusefesten Ring 17 zu verbinden. Dazu ist der Federungskörper 8 mit dem Innenrand eines Flansches 18 verschweißt, der seinerseits vakuumdicht mit dem umlaufenden Rand 17 verbunden ist (Dichtring 19, Verschraubung 21). Natürlich könnten die Bauteile 17 und 18 auch miteinander verschweißt werden. Der Dämpfermantel 9 stützt sich auf dem Flansch 18 ab.

Saugseitig trägt der Federungskörper den Flansch 14. Dieser ist mit einem Reduzierabschnitt 23 ausgerüstet, der druckseitig einen sich radial erstreckenden Rand 24 aufweist. Dieser Rand wird mit dem Federungskörper 8 verschweißt. Außerdem stützt sich der Dämpfermantel 9 darauf ab.

Da der Schwingungsdämpfer 7 bei der Ausführung nach Figur 2 das Gehäuse 2 der Vakuumpumpe 1 nahezu mit seiner gesamten Höhe umschließt, ergibt sich im Vergleich zum Stand der Technik eine drastische Bauhöhenreduzierung.

Bei beiden Ausführungen (Figuren 1,2) ist der Schwingungsdämpfer 7 mit einem an sich bekannten Hubbegrenzer 25 ausgerüstet. Mit dem Flansch 14 verbundene Streben verhindern, unzulässige Belastungen der Federungskörper 8, z.B. durch zu hohe Streckung durch das Gewicht der Pumpe, wenn ein Druckausgleich zwischen innen und außen vorhanden ist.

## Patentansprüche

1. Vakuumpumpe (1) mit einem Gehäuse (2), das mit einer Einlassöffnung (5) ausgerüstet ist, sowie mit einem Schwingungsdämpfer (7), der aus einem Federungskörper (8) und einem Dämpfermantel (9) besteht, **dadurch gekennzeichnet, dass** das Gehäuse (2) der Vakuumpumpe (1) unmittelbar mit einer Stirnseite des Federungskörpers (8) verbunden ist und dass die freie Stirnseite des Federungskörpers (8) einen Anschlussflansch (14) trägt.

2. Vakuumpumpe nach Anspruch 1, **dadurch gekennzeichnet, dass** der die Einlassöffnung (5) umgebende Rand (12) mit der saugseitigen Stirnseite des Federungskörpers (8) verschweißt ist.

3. Vakuumpumpe nach Anspruch 2, **dadurch gekennzeichnet, dass** sich der Dämpfermantel (9) auf dem Rand (12) des Gehäuses (2) der Vakuumpumpe (1) abstützt.

4. Vakuumpumpe nach Anspruch 1, **dadurch gekennzeichnet, dass** der innere Durchmesser des Federungskörpers (8) größer ist als der Durchmesser des Gehäuses (2)der Vakuumpumpe (1) und dass der Federungskörper (8) derart mit dem Gehäuse (2) der Vakuumpumpe (1) verbunden ist, dass er das Gehäuse (2) zumindest abschnittsweise umschließt.

5. Vakuumpumpe nach Anspruch 4, **dadurch gekennzeichnet, dass** ihr Gehäuse (2) mit einem umlaufenden Ring (17) ausgerüstet ist und dass das druckseitige Ende des Federungskörpers (8) mit diesem Ring (17) vakuumdicht verbunden ist.

6. Vakuumpumpe nach Anspruch 5, **dadurch gekennzeichnet, dass** das druckseitige Ende des Federungskörpers (8) mit einem Flansch (18) verschweißt ist, der seinerseits mit dem umlaufenden Ring (17) vakuumdicht verbunden ist.

7. Vakuumpumpe nach Anspruch 6, **dadurch gekennzeichnet, dass** sich der Dämpfermantel (9) auf dem Flansch (18) abstützt.

8. Vakuumpumpe nach einem der Ansprüche 4 bis 7 **dadurch gekennzeichnet, dass** Bestandteil des Anschlußstutzens (14) ein Reduzierabschnitt (23) mit einem sich radial erstreckenden Rand (24) ist, der mit dem Federungskörper (8) verschweißt ist und auf dem sich der Dämpfermantel (9) abstützt.

9. Vakuumpumpe nach einem der vorhergehenden Ansprüche, **dadurch gekennzeichnet, dass** der Schwingungsdämpfer (7) mit einem Hubbegrenzer (25) ausgerüstet ist.

## Claims

1. Vacuum pump (1) with a casing (2) which is provided with an inlet opening (5), and with a vibration absorber (7) which consists of a cushioning body (8) and an absorber jacket (9), **characterised in that** the casing (2) of the vacuum pump (1) is connected directly to an end face of the cushioning body (8), and that the free end face of the cushioning body (8) bears a connection flange (14).

2. Vacuum pump according to Claim 1, **characterised in that** the edge (12) which surrounds the inlet opening (5) is welded to the end face of the cushioning body (8) which is on the intake side.

3. Vacuum pump according to Claim 2, **characterised in that** the absorber jacket (9) is supported on the edge (12) of the casing (2) of the vacuum pump (1).

4. Vacuum pump according to Claim 1, **characterised in that** the internal diameter of the cushioning body (8) is greater than the diameter of the casing (2) of the vacuum pump (1), and that the cushioning body (8) is connected to the casing (2) of the vacuum pump (1) such that it encloses the casing (2) at least in portions.

5. Vacuum pump according to Claim 4, **characterised in that** its casing (2) is provided with an all-round ring (17), and that the end of the cushioning body (8) which is on the delivery side is connected to this ring (17) in a vacuum-tight manner.

6. Vacuum pump according to Claim 5, **characterised in that** the end of the cushioning body (8) which is on the delivery side is welded to a flange (18) which is in turn connected to the all-round ring (17) in a vacuum-tight manner.

7. Vacuum pump according to Claim 6, **characterised in that** the absorber jacket (9) is supported on the flange (18).

8. Vacuum pump according to any one of Claims 4 to 7, **characterised in that** a reducing portion (23) with a radially extending edge (24) is a component part of the connection piece (14), the edge being welded to the cushioning body (8) and supported on the absorber jacket (9).

9. Vacuum pump according to any one of the preceding Claims, **characterised in that** the vibration absorber (7) is provided with a travel limiter (25).

## Revendications

1. Pompe à vide (1) comprenant un boîtier (2) muni d'un orifice d'entrée (5), et un amortisseur d'oscillations (7) composé d'un corps élastique (8) et d'une enveloppe d'amortisseur (9), **caractérisée en ce que** le boîtier (2) de la pompe à vide (1) est relié directement à une face frontale du corps élastique (8), et la face frontale libre du corps élastique (8) porte une bride de raccordement (14).

2. Pompe à vide selon la revendication 1, **caractérisée en ce que** le bord (12) entourant l'orifice d'entrée (5) est soudé avec la face frontale côté aspiration du corps élastique (8).

3. Pompe à vide selon la revendication 2, **caractérisée en ce que** l'enveloppe d'amortisseur (9) prend appui sur le bord (12) du boîtier (2) de la pompe à vide (1).

4. Pompe à vide selon la revendication 1, **caractérisée en ce que** le diamètre intérieur du corps élastique (8) est supérieur au diamètre du boîtier (2) de la pompe à vide (1), et le corps élastique (8) est relié au boîtier (2) de la pompe à vide (1) de sorte qu'il entoure le boîtier (2) au moins partiellement.

5. Pompe à vide selon la revendication 4, **caractérisée en ce que** son boîtier (2) est muni d'une bague circulaire (17), et l'extrémité côté pression du corps élastique (8) est reliée à cette bague (17) de façon étanche au vide.

6. Pompe à vide selon la revendication 5, **caractérisée en ce que** l'extrémité côté pression du corps élastique (8) est soudée avec une bride (18) qui pour sa part est reliée à la bague circulaire (17) de façon étanche au vide.

7. Pompe à vide selon la revendication 6, **caractérisée en ce que** l'enveloppe d'amortisseur (9) prend appui sur la bride (18).

8. Pompe à vide selon l'une quelconque des revendications 4 à 7, **caractérisée en ce que** la bride de raccordement (14) comprend un segment de réduction (23) avec un bord (24) s'étendant radialement, qui est soudé avec le corps élastique (8) et sur lequel prend appui l'enveloppe d'amortisseur (9).

9. Pompe à vide selon l'une quelconque des revendications précédentes, **caractérisée en ce que** l'amortisseur d'oscillations (7) est muni d'un limiteur de course (25).
